# EUROPÄISCHE PATENTSCHRIFT

(11) **EP 4 282 581 B1**
(45) Veröffentlichungstag und Bekanntmachung des Hinweises auf die Patenterteilung: **19.02.2025**
(21) Anmeldenummer: 23173339.5
(22) Anmeldetag: 15.05.2023
(51) Int. Cl.: B23Q 11/00, B23Q 11/02

(54) **WERKZEUGMASCHINE MIT KONTROLLIERTER SPANABFUHR**
MACHINE TOOL WITH CONTROLLED CHIP REMOVAL
MACHINE-OUTIL AVEC ÉVACUATION CONTRÔLÉE DES COPEAUX

(30) Priorität: 24.05.2022 DE 102022113152
(43) Veröffentlichungstag der Anmeldung: 29.11.2023
(73) Patentinhaber: stoba Präzisionstechnik GmbH & Co. KG, 71522 Backnang (DE)
(72) Erfinder: BARTH, Harald, 71522 Backnang (DE); MÜLLER, Heiko, 71404 Korb (DE)
(74) Vertreter: Winter, Brandl - Partnerschaft mbB

(56) Entgegenhaltungen:
- WO-A1-2020/083440
- US-A1- 2017 113 314
- US-B2- 7 290 966
- US-B2- 7 360 271

## Beschreibung

Die Erfindung betrifft eine Werkzeugmaschine, mit einem Werkstück und einem Werkzeug zur spanenden Bearbeitung des Werkstücks.

Durch den Einsatz von Werkzeugmaschinen können Werkstücke in mehreren Bearbeitungsschritten und mit unterschiedlichen Werkzeugen automatisiert fertigbearbeitet werden. Jedoch kann es aufgrund verschiedener Faktoren, wie beispielsweise aufgrund der Bearbeitung innerhalb eines geschlossenen, meist engen Raums innerhalb der Werkzeugmaschine oder aufgrund der eingesetzten Fertigungstechnologie, zu einem ungünstigen Spanfluss kommen. Etwa kann es zu einem Verklemmen und/oder Anhaften der Späne am Werkstück, einem Herumwickeln der Späne, insbesondere von langen, dünnen Spänen, um das Werkzeug oder einer unkontrollierten Spanabfuhr kommen.

Dies hat zur Folge, dass die Späne die bereits bearbeiteten Oberflächen beschädigen oder der Bearbeitungsprozess unterbrochen werden muss, um die Werkstücke oder Werkzeuge vor einer nachfolgenden Bearbeitung von den Spänen zu befreien, was einerseits einen erhöhten Personalaufwand für das manuelle Entfernen und somit hohe Kosten mit sich bringt und ein Verletzungsrisiko für den Menschen und ein Beschädigungsrisiko des Werkstücks beim Entfernen der Späne birgt, ohne Gewährleistung dafür, dass alle Späne entfernt oder in einen störungsneutralen Bereich bewegt worden sind.

Das Problem der unkontrollierten Spanabfuhr ist bei solchen Werkstücken von hoher Bedeutung, die hohe Anforderungen an ihre Fertigungstoleranzen haben. Insbesondere, wenn ein Werkstück aufgrund der geforderten Fertigungstoleranz nur in einer Spannposition, d.h. ohne Umspannen, fertigbearbeitet werden muss, ergeben sich weitere Einschränkungen, etwa hinsichtlich einer zu verwendenden Spannfläche am Werkstück oder einer Geometrie eines Spannmechanismus für das Werkstück, welche die Spanabfuhr zusätzlich beeinträchtigen oder gar negativ beeinflussen können.

Die DE 10 2018 126 437 A1 offenbart eine Anlage mit einer Werkzeugmaschine und mit einer Reinigungsstation zur Reinigung von Bauteilen mittels rotierender Bürsten.

Die DE 10 2006 022 588 A1 offenbart eine Reinigung von Spindeln einer Werkzeugmaschine mittels gegenläufig rotierender Bürsten.

WO 2020/083440 A1 offenbart eine Werkzeugmaschine nach dem Oberbegriff von Anspruch 1.

Es ist daher die Aufgabe der Erfindung, eine Werkzeugmaschine bereitzustellen, mit der eine spanende, hochpräzise Bearbeitung von Werkstücken durchgeführt werden kann und gleichzeitig die Spanabfuhr in jedem Anwendungsfall kontrolliert, insbesondere ohne nachteiligen Effekt auf die Bearbeitungsgenauigkeit, Bearbeitungskosten oder Bearbeitungsdauer, erfolgen kann.

Die Aufgabe der Erfindung wird durch eine Werkzeugmaschine mit den Merkmalen des Anspruchs 1 gelöst. Vorteilhafte Weiterbildungen sind Gegenstand der Unteransprüche.

Insbesondere wird die Aufgabe der Erfindung gemäß einem ersten Aspekt dadurch gelöst, dass die Werkzeugmaschine eine Entspanvorrichtung aufweist, die durch zwei Bürsten mit etwa parallelen Bürstenlängsachsen gebildet ist. Die Bürsten sind in einer zueinander gegenläufigen Rotationsbewegung um ihre über einen Spalt beabstandet angeordneten Bürstenlängsachsen drehantreibbar. Die Bürstenlängsachsen sind die Rotationsachsen. Durch die gegenläufige Rotationsbewegung der beiden Bürsten kann auf besonders einfache Weise ein Abstreifmechanismus realisiert werden, durch den anhaftende Späne automatisiert, effizient und ohne Beschädigungs- oder Gefährdungspotential entfernt werden können.

Erfindungsgemäß weist die Werkzeugmaschine eine Werkstück-Einspannvorrichtung zum Aufnehmen des zu bearbeitenden Werkstücks und eine Werkzeug-Einspannvorrichtung zum Aufnehmen des Werkzeugs auf. Dabei sind die Werkstück-Einspannvorrichtung und die Werkzeug-Einspannvorrichtung relativ zu der Entspanvorrichtung derart innerhalb der Werkzeugmaschine verlagerbar, dass das Werkstück und das Werkzeug in den Spalt der Entspanvorrichtung einführbar sind. Das heißt, dass das Werkstück und das Werkzeug in einen Zwischenraum zwischen den Bürsten eingetaucht werden können, so dass die Bürsten entlang einer Oberfläche des Werkstücks bzw. des Werkzeugs entlanggleiten/entlangrotieren und dadurch das Werkstück bzw. das Werkzeug von Spänen befreien.

Dabei findet die Spanbefreiung insbesondere direkt innerhalb der Werkzeugmaschine statt, so dass nach einem Beenden der Spanbefreiung das Werkstück direkt innerhalb der Werkzeugmaschine weiterbearbeitet werden kann.

Gemäß einer bevorzugten Weiterbildung kann eine Größe des Spalts zwischen den Bürstenlängsachsen einstellbar/verstellbar sein. Das heißt, dass ein Abstand zwischen den Bürstenlängsachsen in Abhängigkeit der Abmessungen des Werkstücks und/oder Werkzeugs vergrößert oder verkleinert werden kann, um zu gewährleisten, dass die Bürsten unabhängig von den Abmessungen des Werkstücks und/oder Werkzeugs in Kontakt mit der Oberfläche gelangen können.

Gemäß einer bevorzugten Weiterbildung können die Bürstenlängsachsen in einer Horizontalrichtung der Werkzeugmaschine und/oder senkrecht zu einer Längsachse des Werkzeugs und/oder des Werkstücks ausgerichtet sein. Dies hat den Vorteil, dass ein Eintauchen des Werkzeugs und/oder des Werkstücks besonders einfach umgesetzt werden kann, da sich die Längsachse des Werkzeugs und/oder des Werkstücks üblicherweise in einer Vertikalrichtung ausgerichtet ist.

Gemäß einer bevorzugten Weiterbildung können die Bürsten derart angeordnet und gegenläufig zueinander drehantreibbar sind, dass sich in dem Spalt zwischen den Bürstenlängsachsen eine Wirkrichtung in Schwerkraftrichtung der Werkzeugmaschine, d.h. nach unten, ergibt. Das heißt, dass die aufeinander zu gerichteten Borsten der Bürsten nach unten, und die voneinander weg gerichteten Borsten der Bürsten nach oben rotieren. Somit wird sichergestellt, dass die Späne, die von dem in den Spalt zwischen den Bürsten eintauchenden Werkzeug und/oder Werkstück abgestreift werden, nach unten und somit in einen störungsneutralen Bereich befördert werden können.

Gemäß einer bevorzugten Weiterbildung kann die Werkzeugmaschine einen Spanauffangbehälter aufweisen, der in Schwerkraftrichtung unterhalb der Entspanvorrichtung angeordnet ist, so dass die abgestreiften Späne direkt aufgefangen werden können und nicht in der Werkzeugmaschine unkontrolliert verteilt werden. Somit wird auch eine Entleerung der Späne erleichtert.

Mit anderen Worten betrifft die Erfindung gemäß einem ersten Aspekt eine Werkzeugmaschine, welche vollständig variabel einstellbare und adaptierbare, sich gegenläufig drehende Bürsten aufweist, zwischen denen ein Spalt gebildet ist. Durch den entstehenden Spalt zwischen den Bürsten können die Werkstücke und die Werkzeuge automatisiert hindurchgeführt/hindurchgezogen werden, wodurch die Anhaftungen bzw. Verklemmungen von Spänen nach unten abgestreift werden. Die Bürsten sind je nach ihrem Einsatzzweck kompakt aufgebaut, vollständig automatisierbar und lassen sich auch in bestehende Prozesse integrieren, da sie vollständig einstell- und adaptierbar sind. Durch das Vorsehen der Bürsten kann somit eine händische, kostenintensive Entfernung von anhaftenden und verklemmten Spänen entfallen und gleichzeitig eine 100%ige Teilesauberkeit und Werkzeugsauberkeit gewährleistet werden.

Zudem wird die Aufgabe der Erfindung gemäß einem zweiten Aspekt, der in Kombination mit den Merkmalen des ersten Aspekts vorliegen kann, dadurch gelöst, dass die Werkzeugmaschine eine als Spannzange ausgebildete Werkstück-Einspannvorrichtung aufweist, in der das Werkstück derart einspannbar ist, dass ein zu bearbeitender Abschnitt des Werkstücks radial innerhalb der Spannzange liegt, wobei das Werkstück und das Werkzeug zur Bearbeitung des zu bearbeitenden Abschnitts des Werkstücks um ihre jeweiligen Längsachsen gleichzeitig drehantreibbar sind. Dabei ist der zu bearbeitende Abschnitt des Werkstücks bzw. die erforderliche Bearbeitung des zu bearbeitenden Abschnitt des Werkstücks insbesondere rotationssymmetrisch. Das heißt, dass insbesondere bei einem Bearbeitungsprozess, bei dem der zu bearbeitende Abschnitt des Werkstücks aufgrund von äußeren Umständen, wie etwa der fertigungstoleranzbedingten fehlenden Möglichkeit zur Änderung der Spannposition oder der erforderlichen Werkzeuggeometrie, schwer zugänglich ist, das Problem der Spanabfuhr verstärkt, da die Späne sich in der Spannzange oder dem Werkzeug verfangen können und nicht abgeführt werden können. Dadurch, dass sich sowohl das Werkzeug als auch das Werkstück bei der Bearbeitung gleichzeitig drehen, wird also ein Fräsprozess mit einem Drehprozess kombiniert, wodurch ein besonders kurzer Fließspan entsteht, der trotz beengter Aufnahme des zu bearbeitenden Abschnitts des Werkstücks durch die Spannzange gespült und in eine störungsneutrale Zone abgeführt werden kann.

Gemäß einer bevorzugten Weiterbildung kann das Werkzeug als ein Fräswerkzeug ausgebildet sein, dessen Längsachse achsparallel zu der Längsachse des Werkstücks ist, wobei die Werkzeugmaschine derart ausgebildet ist, dass das Fräswerkzeug zur Bearbeitung des zu bearbeitenden Abschnitts des Werkstücks innerhalb der Spannzange um seine Längsachse rotiert sowie um die Längsachse des Werkstücks umläuft oder nur um seine Längsachse rotiert. Dadurch, dass bereits das Werkstück um seine Längsachse rotiert, kann das Fräswerkzeug nur um seine Längsachse rotiert werden, um den zu bearbeitenden Abschnitt des Werkstücks zu bearbeiten. Alternativ kann es vorteilhaft sein, wenn auch das Fräswerkzeug um die Längsachse des Werkstücks umläuft, so dass die Drehzahl des Werkstücks nicht allein ausschlaggebend für die Fertigungsgenauigkeit ist.

Gemäß einer bevorzugten Weiterbildung kann das Fräswerkzeug auf seinem Außenumfang mehrere axial beabstandete Schneiden verschiedenen Außendurchmessers aufweisen, die zur Bearbeitung gleichzeitig in Bearbeitungseingriff mit dem Werkstück sind. Das heißt, dass das Fräswerkzeug eine maiskolbenartige Außenform besitzt, mit der unterschiedlich tiefe Nuten in das Werkstück eingebracht werden können. Durch die axiale Beabstandung der Schneiden wird die Spanabfuhr zusätzlich unterstützt, da kurze Späne entstehen.

Mit anderen Worten betrifft die Erfindung gemäß einem zweiten Aspekt eine Werkzeugmaschine, bei der sowohl die Werkzeuggeometrie als auch das Werkstück drehantreibbar sind, wodurch ein kurzer Fließspan entsteht, der durch die Spannzange gespült und eine störungsneutrale Zone abgeführt werden kann. Dies hat den Vorteil, dass eine genaue Vor- und Fertigbearbeitung erreicht, der Spanabfluss vorteilhaft ausgelegt, die Werkzeugkosten reduziert, die Maschinenausbringung erhöht und die Ausschusskosten reduziert werden können. Ferner können die Stückkosten reduziert werden.

Weiter wird die Aufgabe der Erfindung gemäß einem dritten Aspekt, der in Kombination mit den Merkmalen des ersten und/oder des zweiten Aspekts vorliegen kann, dadurch gelöst, dass die Werkzeugmaschine einen Werkzeughalter sowie zwei Einstechwerkzeuge aufweist, wobei die Einstechwerkzeuge derart in dem Werkzeughalter aufgenommen sind, dass sie auf in Umfangsrichtung gegenüberliegenden Seiten des Werkstücks angeordnet sind, und die Werkzeugmaschine derart ausgebildet ist, dass das Werkstück zur rotationssymmetrischen Bearbeitung, insbesondere zum Einbringen einer rotationssymmetrischen Nut, gleichzeitig von den zwei Einstechwerkzeugen bearbeitet wird. Das heißt, dass anstelle einer Drehbearbeitung, bei welcher üblicherweise lange und dünne Späne entstehen, das Werkstück gleichzeitig von zwei Einstechwerkzeugen bearbeitet wird, die dafür sorgen, dass der von dem jeweils anderen Einstechwerkzeug erzeugte Span abgetrennt wird. Zudem kann die mechanische Stabilität aufgrund von verringerten Vibrationen verbessert werden. Gemäß einer bevorzugten Weiterbildung können die Längsachsen der Einstechwerkzeuge in einer Radialebene des Werkstücks, insbesondere in einer im Wesentlichen gemeinsamen Radialebene, liegen.

Gemäß einer bevorzugten Weiterbildung können die zwei Einstechwerkzeuge eine Schneidkante mit identischer Geometrie oder mit unterschiedlicher Geometrie aufweisen. Bei unterschiedlichen Werkzeugen können gleichzeitig verschiedene Bereiche des Werkstücks bearbeitet werden, was sich vorteilhaft auf die Gesamtbearbeitungsdauer auswirkt. Bei gleichen Werkzeugen kann gleichzeitig mit den beiden Werkzeugen ein Bereich bearbeitet werden, so dass die Bearbeitungszeit des einen Bereichs verkürzt wird und der Verschleiß der Werkzeuge verringert wird. Somit sind zwar insgesamt gesehen doppelt so viele Werkzeuge erforderlich, die jedoch entsprechend länger eingesetzt werden können, so dass sich keine Nachteile ergeben.

Mit anderen Worten betrifft die Erfindung gemäß einem dritten Aspekt eine Werkzeugmaschine, bei der durch ein spezielles Werkzeug und einen Werkzeughalter, welche an die Maschinengegebenheiten angepasst einen optimalen Spanfluss bietet, so dass sich die Späne nicht um die Bauteile wickeln und Maschinenstörungen verursachen. Insbesondere entsteht bei der sogenannten Hornkopf-Anwendung ein kurzer, fester und breiter Span, der in eine störungsneutrale Zone abgeführt wird, indem die Anwendung Stechdrehen in Kombination mit dem neu entwickelten Werkezughalter und einer optimierten Spülung unter Beachtung der Maschinengegebenheiten eingesetzt wird. Dies hat den Vorteil, dass vorteilhafte Späne erzeugt, die Werkzeugkosten reduziert, die Maschinenausbringung erhöht und die Ausschusskosten reduziert werden können. Ferner können die Stückkosten reduziert werden.

Darüber hinaus wird die Aufgabe der Erfindung gemäß einem vierten Aspekt, der in Kombination mit den Merkmalen des ersten, des zweiten und/oder des dritten Aspekts vorliegen kann, dadurch gelöst, dass ein zu bearbeitender Innendurchmesser des Werkstücks abschnittsweise aus unterschiedlichen Materialien aufgebaut ist und die Werkzeugmaschine eine Reibahle, deren Außendurchmesser auf einen Zieldurchmesser des zu bearbeitenden Innendurchmessers abgestimmt ist, wobei die Werkzeugmaschine derart ausgebildet, dass der zu bearbeitende Innendurchmesser durch die Reibahle in einem einzigen Bearbeitungsschritt, vorzugsweise mit einem gleichbleibenden Bearbeitungsvorschub und einer gleichbleibenden Bearbeitungsdrehzahl, fertigbearbeitet wird. Das heißt, dass der Innendurchmesser nicht durch Drehen erzeugt wird, da sich sonst aufgrund der Werkstoffe unterschiedliche Härte Wellen und Bauchungen bilden würden, sondern eine Reibahle eingesetzt werden, deren Außendurchmesser bereits auf den Zieldurchmesser des zu bearbeitenden Innendurchmessers abgestimmt ist.

Mit anderen Worten betrifft die Erfindung gemäß einem vierten Aspekt eine Werkzeugmaschine, bei der ein funktionsrelevanter Innendurchmesser einer zu fertigenden Baugruppe, insbesondere aus drei Materialien mit unterschiedlichen Härten, aufgrund der geforderten Fertigungstoleranzen in einer Spannung und einer Bearbeitungsrichtung hergestellt werden muss, wofür ein Reibprozess mit einer speziell ausgelegten Reibahle entwickelt wurde, um zum einen die Zylindrizität und Durchmessertoleranz zu halten und zum anderen die Späne in der Entstehung sowie Abführung zielgerichtet zu beeinflussen. Im Gegensatz zu einer Drehbearbeitung, bei der die Teilequalität aufgrund ungenauer Bearbeitung, insbesondere schwankenden Durchmessern und mangelnder Zylindrizität, nicht gewährleistet werden kann, so dass hoher Ausschuss entsteht und eine automatisierte 100%-Prüfung im Folgeprozess erforderlich ist, und bei der die Späne fertigungsbedingt im Bereich des Innendurchmessers erzeugt werden, kann mit der spezielle ausgelegten Reibahle die Genauigkeit der Bauteilkontur erhöht werden und die Spanabfuhr beim Bearbeiten sicher gewährleistet werden, indem die Anwendung Reiben in Kombination mit der neu entwickelten Reibahle mit optimiertem Spänefluss eingesetzt wird. Dies hat den Vorteil, dass vorteilhafte Späne erzeugt, eine genau Vor- und Fertigbearbeitung ermöglicht, eine prozessfähige Fertigung realisiert, die Maschinenausbringung erhöht, die Ausschusskosten reduziert und auf eine 100-%-Prüfung verzichtet werden können. Ferner können die Stückkosten reduziert werden.

Die Erfindung wird nachfolgend mit Hilfe von Zeichnungen erläutert. Es zeigen:
Fign. 1 bis 3 verschiedene Darstellungen einer Entspanvorrichtung einer Werkzeugmaschine,
Fign. 4 bis 7 verschiedene Darstellungen der Werkzeugmaschine, bei der ein Werkstück in einer Spannzange aufgenommen ist,
Fign. 8 und 9 verschiedene Darstellungen der Werkzeugmaschine mit einem Werkzeughalter sowie zwei Einstechwerkzeuge, und
Fign. 10 und 11 verschiedene Darstellungen einer Bearbeitung durch die Werkzeugmaschine, bei der ein zu bearbeitender Innendurchmesser des Werkstücks abschnittsweise aus unterschiedlichen Materialien aufgebaut ist.

Die Zeichnungen sind lediglich schematischer Natur und dienen dem Verständnis der Erfindung. Gleiche Elemente werden mit denselben Bezugszeichen bezeichnet. Merkmale unterschiedlicher Ausführungsformen können beliebig miteinander kombiniert werden.

Die Erfindung betrifft eine Werkzeugmaschine, welche zumindest ein Werkstück 1 und zumindest ein Werkzeug 2 zur spanenden Bearbeitung des Werkstücks 1 aufweist.

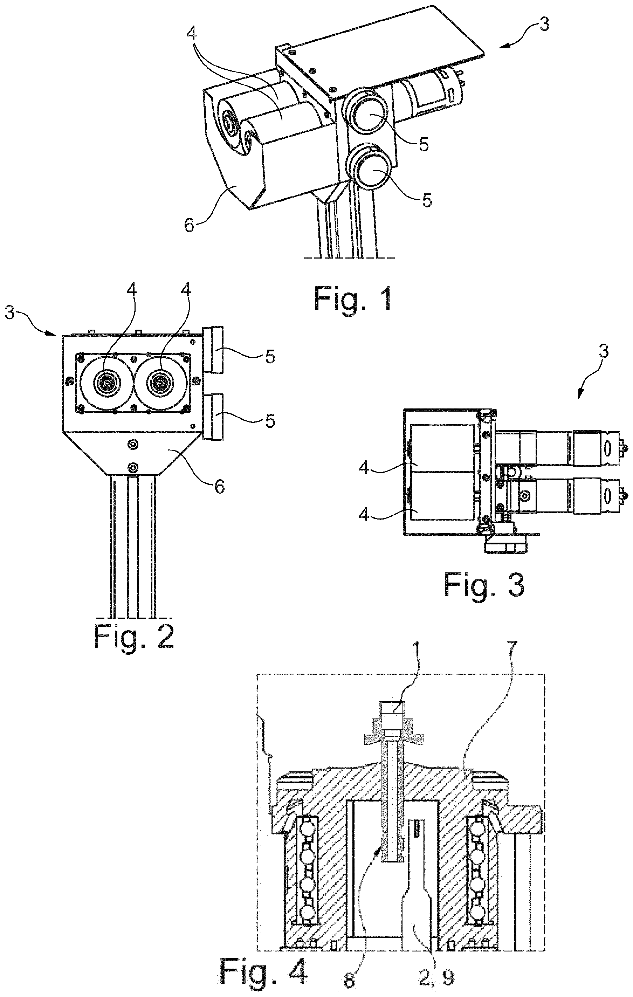

Fign. 1 bis 3 zeigen eine Entspanvorrichtung 3 der erfindungsgemäßen Werkzeugmaschine. Die Entspanvorrichtung 3 weist zwei achsparallele Bürsten 4 auf, welche in einer zueinander gegenläufigen Rotationsbewegung um ihre über einen Spalt beabstandet angeordneten Bürstenlängsachsen drehantreibbar sind.

Ferner kann die Werkzeugmaschine eine (nicht explizit dargestellte) Werkstück-Einspannvorrichtung zum Aufnehmen des zu bearbeitenden Werkstücks 1 aufweisen. Die Werkstück-Einspannvorrichtung ist relativ zu der Entspanvorrichtung 3 derart innerhalb der Werkzeugmaschine verlagerbar, dass das Werkstück 1 in den Spalt der Entspanvorrichtung 3 einführbar ist. Das heißt, dass das Werkstück 1, insbesondere von oben, zwischen die Bürsten 4 eingetaucht werden kann, um bei Rotation der Bürsten 4 an dem Werkstück 1 anhaftende Späne abstreifen zu können.

Zudem die Werkzeugmaschine eine (nicht explizit dargestellte) Werkzeug-Einspannvorrichtung zum Aufnehmen des Werkzeugs 2 aufweisen. Die Werkzeug-Einspannvorrichtung ist relativ zu der Entspanvorrichtung 3 derart innerhalb der Werkzeugmaschine verlagerbar, dass das Werkzeug 2 in den Spalt der Entspanvorrichtung 3 einführbar ist. Das heißt, dass das Werkzeug 2, insbesondere von oben, zwischen die Bürsten 4 eingetaucht werden kann, um bei Rotation der Bürsten 4 an dem Werkzeug 2 anhaftende Späne abstreifen zu können.

Vorzugsweise können die Bürstenlängsachsen in einer Horizontalrichtung der Werkzeugmaschine und/oder senkrecht zu einer Längsachse des Werkzeugs 1 und/oder des Werkstücks 2 ausgerichtet sein. Da die Längsachsen des Werkzeugs 2 und/oder des Werkstücks 1 üblicherweise in Vertikalrichtung/Schwerkraftrichtung ausgerichtet sind, können das Werkzeug 2 und/oder das Werkstück 1 besonders einfach zwischen den Bürsten 4 eingetaucht werden.

Die Entspanvorrichtung 3 kann insbesondere so ausgebildet sein, das eine Größe des Spalts zwischen den Bürstenlängsachsen verstellbar ist. In den dargestellten Figuren weist die Entspanvorrichtung 3 dazu zwei Drehknöpfe 5 auf, durch deren Drehung die Bürstenlängsachsen verschiebbar sind, um den Spalt zwischen den Bürsten 4 entsprechend zu vergrößern oder zu verkleinern. Vorzugsweise können die Bürstenlängsachsen soweit beabstandet sein, dass sich die Bürsten 4 berühren oder geringfügig überlappen.

Ferner können die Bürsten 4 der Entspanvorrichtung 3 vorzugsweise derart angeordnet und gegenläufig zueinander drehantreibbar sein, dass sich in dem Spalt zwischen den Bürstenlängsachsen eine Wirkrichtung in Schwerkraftrichtung der Werkzeugmaschine ergibt. Das heißt, dass die Bürsten 4 vorzugsweise so angetrieben werden, dass sich Borsten der Bürsten 4 an ihren zugewandten Seiten nach unten, d.h. in Vertikalrichtung nach unten, bewegen, so dass die Späne bei Abstreifen nach unten befördert werden. Vorzugsweise kann die Entspanvorrichtung 1 einen Spanauffangbehälter 6 aufweisen, der in Schwerkraftrichtung unterhalb der Bürsten 4 angeordnet ist, so dass die abgestreiften Späne in dem Spanauffangbehälter 6 direkt aufgefangen werden.

Fign. 4 bis 7 zeigen die Werkzeugmaschine, bei der das Werkstück 1 in einer als Spannzange 7 ausgebildeten Werkstück-Einspannvorrichtung aufgenommen ist. Dabei ist das Werkstück 1 derart in der Spannzange 7 eingespannt, dass ein zu bearbeitender Abschnitt 8 des Werkstücks 1 radial innerhalb der Spannzange 7 liegt. Um ein Einschließen von Spänen in der Spannzange 7 zu vermeiden, sind das Werkstück 1 und das Werkzeug 2 zur Bearbeitung des zu bearbeitenden Abschnitts 8 des Werkstücks 1 um ihre jeweiligen Längsachsen gleichzeitig drehantreibbar. Das heißt, dass die Werkzeugmaschine derart ausgebildet ist, dass das Werkstück 1 durch Drehfräsen bearbeitet werden kann.

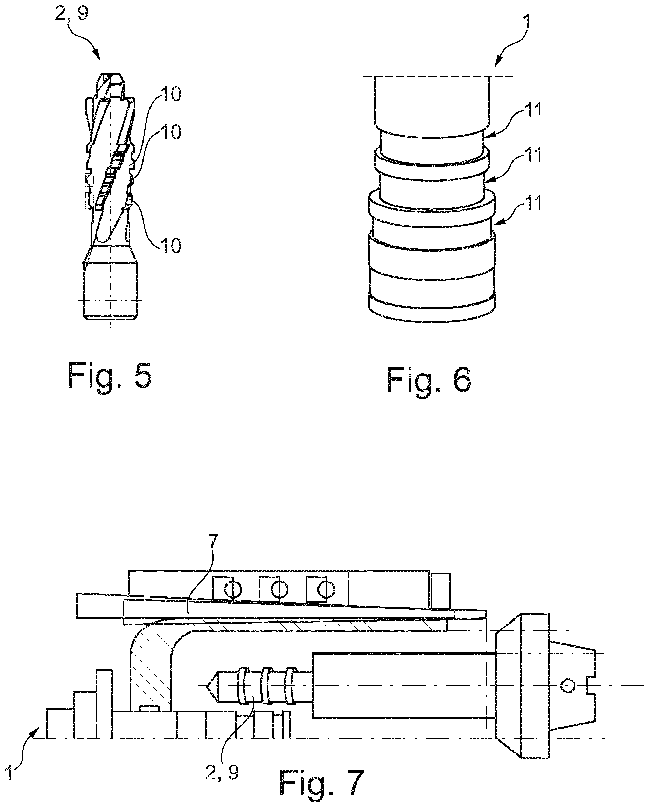

Fig. 5 zeigt das Werkzeug 2, das als ein Fräswerkzeug 9 ausgebildet ist. Eine Längsachse des Fräswerkzeugs 9 ist achsparallel zu der Längsachse des Werkstücks 1 ausgerichtet. Dabei kann die Werkzeugmaschine derart ausgebildet sein, dass das Fräswerkzeug 9 zur Bearbeitung des zu bearbeitenden Abschnitts 8 des Werkstücks 1 innerhalb der Spannzange 7 um seine Längsachse rotiert sowie um die Längsachse des Werkstücks 1 umläuft oder nur um seine Längsachse rotiert. Das Fräswerkzeug 9 weist auf seinem Außenumfang mehrere axial beabstandete Schneiden 10 verschiedenen Außendurchmessers aufweisen, die zur Bearbeitung gleichzeitig in Bearbeitungseingriff mit dem Werkstück 1 sind. Dadurch können mit dem Fräswerkzeug 9, das eine maiskolbenartige Außenform besitzt, unterschiedlich tiefe Nuten 11 in das Werkstück 1 eingebracht werden können (vgl. Fig. 6).

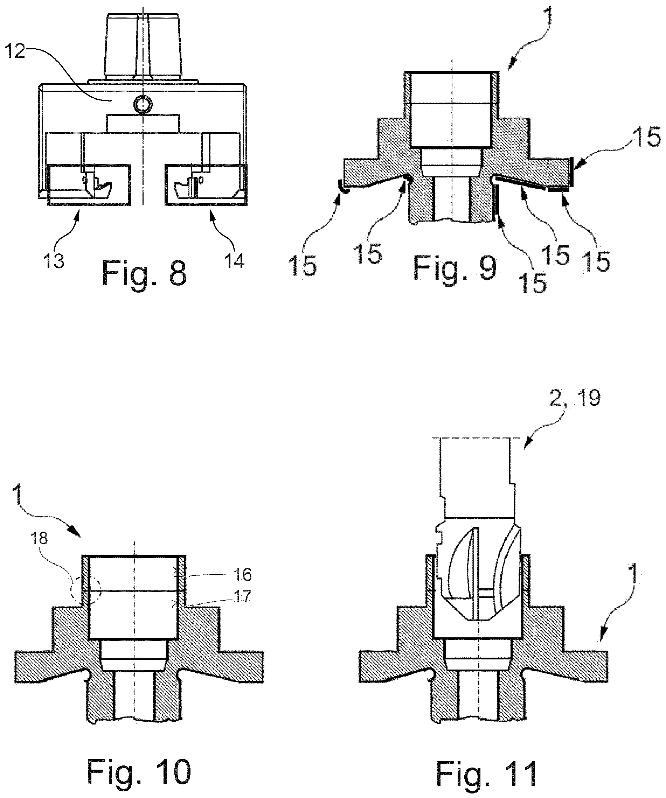

Fign. 8 und 9 zeigen einen Werkzeughalter 12 sowie zwei Einstechwerkzeuge 13, 14 der Werkzeugmaschine. Die Einstechwerkzeuge 13, 14 sind derart in dem Werkzeughalter 12 aufgenommen, dass sie auf in Umfangsrichtung gegenüberliegenden Seiten des Werkstücks 1 angeordnet werden können. Zudem ist die Werkzeugmaschine derart ausgebildet, dass das Werkstück 1 zur rotationssymmetrischen Bearbeitung, insbesondere zum Einbringen einer rotationssymmetrischen Nut, gleichzeitig von den zwei Einstechwerkzeugen 13, 14 bearbeitet werden kann. Durch das gleichzeitige Einstechen können besonders kurze Späne erzeugt werden, da ein von dem ersten Einstechwerkzeug 13 erzeugter Span durch das zweite Einstechwerkzeug 14 abgetrennt wird. In Fig. 9 sind mögliche Bearbeitungsflächen 15 des Werkstücks 1 eingezeichnet, die mit den beiden Einstechwerkzeugen 13, 14 bearbeitet werden können. Dabei können die beiden Einstechwerkzeuge 13, 14 eine Schneidkante mit identischer Geometrie oder mit unterschiedlicher Geometrie aufweisen, um die möglichen Bearbeitungsflächen 15 möglichst effizient bearbeiten zu können.

Fign. 10 und 11 zeigen eine Bearbeitung durch die Werkzeugmaschine, bei der ein zu bearbeitender Innendurchmesser des Werkstücks 1 abschnittsweise aus unterschiedlichen Materialien, insbesondere unterschiedlich harten Materialien, aufgebaut ist. Insbesondere weist das Werkstück 1 einen ersten Innendurchmesserabschnitt 16, der eine erste Materialhärte besitzt, sowie einen zweiten Innendurchmesserabschnitt 17 auf, der eine zweite Materialhärte besitzt, die höher als die erste Materialhärte ist. Die beiden Innendurchmesserabschnitte 16, 17 sind über eine Schweißnaht 18 miteinander verbunden, die eine dritte Materialhärte besitzt, welche höher als die erste Materialhärte und die zweite Materialhärte ist. Da der zu bearbeitenden Innendurchmesser des Werkstücks 1 funktionsrelevant ist, ist es fertigungsbedingt entscheidend, dass die Bearbeitung des Innendurchmessers in einem einzigen Bearbeitungsschritt, insbesondere auch mit dem gleichen Werkzeugvorschub und der gleichen Werkzeugdrehzahl erfolgt. Dabei weist die Werkzeugmaschine das als eine Reibahle 19 ausbildete Werkzeug auf, deren Außendurchmesser auf einen Zieldurchmesser des zu bearbeitenden Innendurchmessers abgestimmt ist. Somit kann die Werkzeugmaschine derart ausgebildet sein, dass der zu bearbeitende Innendurchmesser, durch die Reibahle 19 in einem Bearbeitungsschritt fertigbearbeitet wird, wodurch sich trotz der unterschiedlichen Materialhärten eine hohe Bearbeitungsgenauigkeit ergibt.

## Patentansprüche

1. Werkzeugmaschine, mit einem Werkstück (1) und einem Werkzeug (2) zur spanenden Bearbeitung des Werkstücks (1), wobei die Werkzeugmaschine eine Entspanvorrichtung (3) aufweist, die durch zwei Bürsten (4) mit parallelen Bürstenlängsachsen gebildet ist, wobei die Bürsten (4) in einer zueinander gegenläufigen Rotationsbewegung um ihre über einen Spalt beabstandet angeordneten Bürstenlängsachsen drehantreibbar sind, wobei die Werkzeugmaschine eine Werkstück-Einspannvorrichtung zum Aufnehmen des zu bearbeitenden Werkstücks (1) und eine Werkzeug-Einspannvorrichtung zum Aufnehmen des Werkzeugs (2) aufweist, **dadurch gekennzeichnet, dass** die Werkstück-Einspannvorrichtung und die Werkzeug-Einspannvorrichtung relativ zu der Entspanvorrichtung (3) derart innerhalb der Werkzeugmaschine verlagerbar sind, dass das Werkstück (1) und das Werkzeug (2) in den Spalt der Entspanvorrichtung (3) einführbar sind.

2. Werkzeugmaschine nach Anspruch 1, **dadurch gekennzeichnet, dass** eine Größe des Spalts zwischen den Bürstenlängsachsen verstellbar ist.

3. Werkzeugmaschine nach einem der Ansprüche 1 bis 2, **dadurch gekennzeichnet, dass** die Bürstenlängsachsen in einer Horizontalrichtung der Werkzeugmaschine und/oder senkrecht zu einer Längsachse des Werkstücks (1) und/oder des Werkzeugs (2) ausgerichtet sind.

4. Werkzeugmaschine nach einem der Ansprüche 1 bis 3, **dadurch gekennzeichnet, dass** die Bürsten (4) derart angeordnet und gegenläufig zueinander drehantreibbar sind, dass sich in dem Spalt zwischen den Bürstenlängsachsen eine Wirkrichtung in Schwerkraftrichtung der Werkzeugmaschine ergibt.

5. Werkzeugmaschine nach einem der Ansprüche 1 bis 4, **dadurch gekennzeichnet, dass** die Werkzeugmaschine eine als Spannzange (7) ausgebildete Werkstück-Einspannvorrichtung aufweist, in der das Werkstück (1) derart einspannbar ist, dass ein zu bearbeitender Abschnitt (8) des Werkstücks (1) radial innerhalb der Spannzange (7) liegt, wobei das Werkstück (1) und das Werkzeug (2) zur Bearbeitung des zu bearbeitenden Abschnitts (8) des Werkstücks (1) um ihre jeweiligen Längsachsen gleichzeitig drehantreibbar sind.

6. Werkzeugmaschine nach Anspruch 5, **dadurch gekennzeichnet, dass** das Werkzeug (2) als ein Fräswerkzeug (9) ausgebildet ist, dessen Längsachse achsparallel zu der Längsachse des Werkstücks (1) ist, wobei die Werkzeugmaschine derart ausgebildet ist, dass das Fräswerkzeug (9) zur Bearbeitung des zu bearbeitenden Abschnitts (8) des Werkstücks (1) innerhalb der Spannzange (7) um seine Längsachse rotiert sowie um die Längsachse des Werkstücks (1) umläuft oder nur um seine Längsachse rotiert.

7. Werkzeugmaschine nach einem der Ansprüche 1 bis 6, **dadurch gekennzeichnet, dass** die Werkzeugmaschine einen Werkzeughalter (12) sowie zwei Einstechwerkzeuge (2, 13, 14) aufweist, wobei die Einstechwerkzeuge (13, 14) derart in dem Werkzeughalter (12) aufgenommen sind, dass sie auf in Umfangsrichtung gegenüberliegenden Seiten des Werkstücks (1) angeordnet sind, und die Werkzeugmaschine derart ausgebildet ist, dass das Werkstück (1) zur rotationssymmetrischen Bearbeitung gleichzeitig von den zwei Einstechwerkzeugen (13, 14) bearbeitet wird.

8. Werkzeugmaschine nach Anspruch 7, **dadurch gekennzeichnet, dass** die zwei Einstechwerkzeuge (13, 14) eine Schneidkante mit identischer Geometrie oder mit unterschiedlicher Geometrie aufweisen.

9. Werkzeugmaschine nach einem der Ansprüche 1 bis 8, **dadurch gekennzeichnet, dass** ein zu bearbeitender Innendurchmesser des Werkstücks (1) abschnittsweise aus unterschiedlichen Materialien aufgebaut ist und die Werkzeugmaschine eine Reibahle (2, 19) ist, deren Außendurchmesser auf einen Zieldurchmesser des zu bearbeitenden Innendurchmessers abgestimmt ist, wobei die Werkzeugmaschine derart ausgebildet ist, dass der zu bearbeitende Innendurchmesser durch die Reibahle (2, 19) in einem einzigen Bearbeitungsschritt fertigbearbeitet wird.

## Claims

1. Machine tool, having a workpiece (1) and a tool (2) for machining the workpiece (1), the machine tool having a chip removal device (3) which is formed by two brushes (4) having parallel longitudinal brush axes, the brushes (4) being counter-rotationally movable about their longitudinal axes, which are arranged at a distance from one another via a gap, the machine tool having a workpiece clamping device for holding the workpiece (1) to be machined and a tool clamping device for holding the tool (2), **characterized in that** the workpiece clamping device and the tool clamping device can be displaced relative to the chip removal device (3) within the machine tool in such a way that the workpiece (1) and the tool (2) can be introduced into the gap of the chip removal device (3).

2. Machine tool according to claim 1, **characterized in that** a size of the gap between the longitudinal axes of the brushes is adjustable.

3. Machine tool according to one of claims 1 to 2, **characterized in that** the longitudinal axes of the brushes are aligned in a horizontal direction of the machine tool and/or perpendicular to a longitudinal axis of the workpiece (1) and/or of the tool (2).

4. Machine tool according to one of the claims 1 to 3, **characterized in that** the brushes (4) are arranged and are rotationally movable in opposite directions to one another in such a way that, in the gap between the longitudinal axes of the brushes, the direction of action is in the direction of the force of gravity of the machine tool.

5. Machine tool according to one of claims 1 to 4, **characterized in that** the machine tool has a workpiece clamping device designed as a collet chuck (7), in which the workpiece (1) can be clamped in such a way that a section (8) of the workpiece (1) to be machined lies radially within the collet chuck (7), wherein the workpiece (1) and the tool (2) can be driven in rotation simultaneously about their respective longitudinal axes in order to machine the section (8) of the workpiece (1) to be machined.

6. Machine tool according to claim 5, **characterized in that** the tool (2) is configured as a milling tool (9), the longitudinal axis of which is axially parallel to the longitudinal axis of the workpiece (1), wherein the machine tool is configured in such a way that the milling tool (9) for machining the section (8) of the workpiece (1) to be machined rotates about its longitudinal axis within the collet chuck (7) and also revolves about the longitudinal axis of the workpiece (1) or only rotates about its longitudinal axis.

7. Machine tool according to one of the claims 1 to 6, **characterized in that** the machine tool has a tool holder (12) and two infeed tools (2, 13, 14), the infeed tools (13, 14) being accommodated in the tool holder (12) in such a way that they are arranged on sides of the workpiece (1) that are opposite in the peripheral direction, and the machine tool is designed in such a way that the workpiece (1) is machined simultaneously by the two infeed tools (13, 14) for rotationally symmetrical machining.

8. Machine tool according to claim 7, **characterized in that** the two infeed tools (13, 14) have a cutting edge with an identical geometry or with a different geometry.

9. Machine tool according to one of the claims 1 to 8, **characterized in that** an inside diameter of the workpiece (1) to be machined is constructed in sections from different materials and the machine tool is a reamer (2, 19) whose outside diameter is matched to a target diameter of the internal diameter to be machined, the machine tool being designed in such a way that the internal diameter to be machined is finishmachined by the reamer (2, 19) in a single machining step.

## Revendications

1. Machine-outil, avec une pièce (1) et un outil (2) pour l'usinage par enlèvement de copeaux de la pièce (1), dans laquelle la machine-outil présente un dispositif de desserrage (3) qui est formé par deux brosses (4) avec des axes longitudinaux de brosse parallèles, dans laquelle les brosses (4) peuvent être entraînées en rotation dans un mouvement de rotation mutuellement opposé autour de leurs axes longitudinaux de brosse disposés à distance au-dessus d'une fente, dans laquelle la machine-outil présente un dispositif de serrage de pièce pour loger la pièce (1) à usiner et un dispositif de serrage d'outil pour loger l'outil (2), **caractérisée en ce que** le dispositif de serrage de pièce et le dispositif de serrage d'outil peuvent être déplacés à l'intérieur de la machine-outil par rapport au dispositif de desserrage (3) de sorte que la pièce (1) et l'outil (2) puissent être introduits dans la fente du dispositif de desserrage (3).

2. Machine-outil selon la revendication 1, **caractérisée en ce qu'**une taille de la fente entre les axes longitudinaux de brosse est réglable.

3. Machine-outil selon l'une quelconque des revendications 1 à 2, **caractérisée en ce que** les axes longitudinaux de brosse sont orientés dans une direction horizontale de la machine-outil et/ou perpendiculairement à un axe longitudinal de la pièce (1) et/ou de l'outil (2).

4. Machine-outil selon l'une quelconque des revendications 1 à 3, **caractérisée en ce que** les brosses (4) sont disposées et peuvent être entraînées en rotation dans des directions opposées l'une par rapport à l'autre de sorte qu'il en résulte une direction d'action en direction de la gravité de la machine-outil dans la fente entre les axes longitudinaux de brosse.

5. Machine-outil selon l'une quelconque des revendications 1 à 4, **caractérisée en ce que** la machine-outil présente un dispositif de serrage de pièce conçu en tant que pince de serrage (7), dans lequel la pièce (1) peut être serrée de sorte qu'une section (8) à usiner de la pièce (1) se situe radialement à l'intérieur de la pince de serrage (7), dans laquelle la pièce (1) et l'outil (2) peuvent être entraînés en rotation simultanément autour de leurs axes longitudinaux respectifs pour usiner la section (8) à usiner de la pièce (1).

6. Machine-outil selon la revendication 5, **caractérisée en ce que** l'outil (2) est conçu en tant qu'outil de fraisage (9) dont l'axe longitudinal est parallèle à l'axe longitudinal de la pièce (1), dans laquelle la machine-outil est conçue de sorte que l'outil de fraisage (9) tourne autour de son axe longitudinal pour usiner la section (8) à usiner de la pièce (1) à l'intérieur de la pince de serrage (7) ainsi qu'autour de l'axe longitudinal de la pièce (1) ou tourne uniquement autour de son axe longitudinal.

7. Machine-outil selon l'une quelconque des revendications 1 à 6, **caractérisée en ce que** la machine-outil présente un porte-outil (12) ainsi que deux outils de rainurage (2, 13, 14), dans laquelle les outils de rainurage (13, 14) sont logés dans le porte-outil (12) de sorte qu'ils soient disposés sur des côtés opposés de la pièce (1) dans la direction circonférentielle, et la machine-outil est conçue de sorte que la pièce (1) soit usinée simultanément par les deux outils de rainurage (13, 14) pour un usinage à symétrie de révolution.

8. Machine-outil selon la revendication 7, **caractérisée en ce que** les deux outils de rainurage (13, 14) présentent une arête de coupe à géométrie identique ou à géométrie différente.

9. Machine-outil selon l'une quelconque des revendications 1 à 8, **caractérisée en ce qu'**un diamètre intérieur à traiter de la pièce (1) est constitué par sections de matériaux différents et la machine-outil est un alésoir (2, 19) dont le diamètre extérieur est adapté à un diamètre cible du diamètre intérieur à usiner, dans laquelle la machine-outil est conçue de sorte que le diamètre intérieur à usiner soit fini par l'alésoir (2, 19) en une seule étape d'usinage.
